# EUROPEAN PATENT APPLICATION

(11) **EP 4 813 486 A1**
(43) Date of publication of application: **30.09.2026**
(21) Application number: 26167654.8
(22) Date of filing: 25.03.2026
(51) Int. Cl.: A63F 13/86

(54) **INFORMATION PROCESSING APPARATUS, METHOD, AND PROGRAM**

(30) Priority: 26.03.2025 JP 2025051649
(71) Applicant: Nintendo Co., Ltd., Kyoto-shi, Kyoto 601-8501 (JP)
(72) Inventor: OIWA, Ryota, Kyoto, 601-8501 (JP); KOBAYASHI, Masayoshi, Kyoto, 601-8501 (JP)
(74) Representative: Lorenz Seidler Gossel Part. mbB

(57) **Abstract**

An information processing apparatus (100) capable of executing a game application (180), comprising: one or more processors (102); and one or more memories (108) storing instructions that cause the one or more processors to perform operations comprising: executing the game application as a first game application; participating in a session in which a first image of the game application and a second image of the game application are distributed, the second image having a higher quality than the first image; displaying at least one of the first image or the second image distributed by another information processing apparatus; and restricting the other information processing apparatus from displaying the first image of the first game application or displaying the second image of the first game application, based on a first request by the first game application.

## Description

The present disclosure relates to an information processing apparatus, an information processing system, a method, and a program.

### INTRODUCTION

Communicating information online is publicly known.

### SUMMARY

(Configuration 1) An exemplary embodiment provides an information processing apparatus configured to execute a game application, the information processing apparatus comprising: one or more processors ; and one or more memories storing instructions that, when executed by the one or more processors, cause the information processing apparatus to perform operations comprising: executing the game application as a first game application ; participating in a session in which a first video of the game application and a second video of the game application are distributed, the second video having a higher quality than the first video ; displaying at least one of the first video or the second video distributed by another information processing apparatus ; and restricting the other information processing apparatus from displaying the first video of the first game application or displaying the second video of the first game application, based on a first request by the first game application.

(Configuration 2) In Configuration 1, the restricting the other information processing apparatus from displaying the second video is performed by stopping distributing the second video by the information processing apparatus based on the first request.

(Configuration 3) In Configuration 1, the second video is distributed when the first video is distributed.

(Configuration 4) In Configuration 1, the restricting the other information processing apparatus from displaying the second video based on the first request comprises permitting displaying the first video instead of the second video while distributing the second video.

(Configuration 5) In Configuration 1, a resolution of the second video is higher than a resolution of the first video.

(Configuration 6) In Configuration 1, a bit rate of the second video is higher than a bit rate of the first video.

(Configuration 7) In Configuration 1, a frame rate of the second video is higher than a frame rate of the first video.

(Configuration 8) In Configuration 1, the second video is displayed larger than the first video.

(Configuration 9) In Configuration 1, the operations further comprise displaying a third video that is a video of the first game application ; and the third video is higher in quality than the first video.

(Configuration 10) In Configuration 1, the second video is displayed as a full screen display.

(Configuration 11) In Configuration 1, the second video, the first video, and one or more other first videos different from each other are displayed.

(Configuration 12) In Configuration 1, the operations further comprise: displaying a substitute image comprising information indicating that displaying is restricted instead of the second video, when the information processing apparatus is restricted from displaying the second video.

(Configuration 13) In Configuration 1, only one of the first video or the second video is displayed.

(Configuration 14) An exemplary embodiment provides a method used for an information processing apparatus capable of executing a game application, the method comprising: executing the game application as a first game application ; participating in a session in which a first video of the game application and a second video of the game application are distributed, the second video having a higher quality than the first video ; displaying at least one of the first video or the second video distributed by another information processing apparatus ; and restricting the other information processing apparatus from displaying the first video of the first game application or displaying the second video of the first game application, based on a first request by the first game application.

(Configuration 15) An exemplary embodiment provides a program causing one or more processors to perform the method of Configuration 14.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

FIG. 1 is an exemplary illustrative non-limiting schematic diagram showing a configuration example of a system according to the present embodiment.
FIGS. 2A and 2B are exemplary illustrative non-limiting drawings for describing an example of a chat screen generated in a game apparatus according to the present embodiment.
FIG. 3 is an exemplary illustrative non-limiting schematic diagram showing a hardware configuration example of the game apparatus according to the present embodiment.
FIG. 4 is an exemplary illustrative non-limiting schematic diagram showing a hardware configuration example of a management server according to the present embodiment.
FIG. 5 is an exemplary illustrative non-limiting schematic diagram showing a software configuration example of the game apparatus according to the present embodiment.
FIG. 6 is an exemplary illustrative non-limiting flowchart showing a processing example of an interface of a chat execution unit according to the present embodiment.
FIG. 7 is an exemplary illustrative non-limiting sequence diagram showing an example of display restriction processing by a game application according to the present embodiment.
FIG. 8 is an exemplary illustrative non-limiting drawing showing an example of a case where a display request for a second reception distribution video of an account B is received in a sequence SQ11.
FIG. 9 is an exemplary illustrative non-limiting drawing showing an example of a case where a display request for a second reception distribution video of an account C is received in the sequence SQ11.
FIGS. 10A and 10B are exemplary illustrative non-limiting drawings showing a modification example of a display mode of the second reception distribution video.
FIG. 11 is an exemplary illustrative non-limiting drawing for describing a modification example of a video transmitted before a restriction request.

### DETAILED DESCRIPTION OF NON-LIMITING EXAMPLE EMBODIMENTS

The present embodiment will be described in detail with reference to the drawings. Note that the same or corresponding parts in the drawings are denoted by the same reference numerals, and description thereof will not be repeated.

Even when data is described using the same term, contents of the data do not necessarily match completely. At least, when certain data and different data both transmit specific information, the data may be regarded as the same data. Also, a name attached to data is for convenience, and does not limit a range or technical meaning indicated by the data.

A program causing a computer to execute processing may be a single program, or may be a program group including a plurality of programs. In the present disclosure, "a program" does not need to mean a single program, and may include a program group. Also, "a program" does not need to be entirely stored in one apparatus. "A program" may mean, for example, the entirety of a plurality of programs respectively stored in a plurality of apparatuses included in a computer.

### [A. Configuration Example of System]

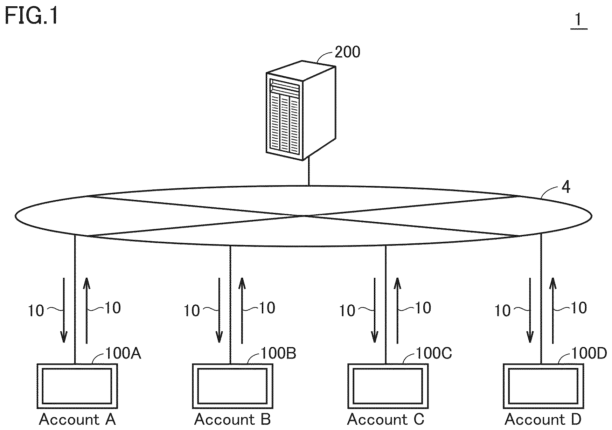

FIG. 1 is a schematic diagram showing a configuration example of a system 1 according to the present embodiment. The system 1 includes one or a plurality of game apparatuses 100. At least one or some of the game apparatuses 100 can transmit a video of a game application executed in the own apparatus to another terminal. FIG. 1 shows a configuration example of the system 1 including four game apparatuses 100 connected to a network 4. In the following description, when it is necessary to specify each of the plurality of game apparatuses 100, the game apparatuses 100 are distinguished by attaching an alphabet. In the example of FIG. 1, four game apparatuses 100A, 100B, 100C, and 100D are shown.

In the system 1 according to the present embodiment, a user using the game apparatus 100 has an own account, and the own account is associated with each game apparatus 100. In the present embodiment, accounts A to D are respectively associated with the game apparatuses 100A to 100D.

The user having the account can cause the associated account to participate in one or a plurality of chat groups by performing a specified input to the game apparatus 100. Hereinafter, the chat group may be simply referred to as a "group". The game apparatus 100 corresponding to the account participating in any group transmits data used for communication between users to another game apparatus 100 corresponding to another account participating in the group. Hereinafter, the data used for communication between users may be referred to as "communication data 10". Thereby, communication between users is realized within the group.

The communication data 10 may include, for example, a video acquired by the game apparatus 100, a sound acquired by the game apparatus 100, a text acquired by the game apparatus 100, information regarding an application being executed in the game apparatus 100, etc. Note that one piece of communication data 10 does not need to include all data, and one piece of data may be divided into a plurality of pieces of communication data 10. One piece of communication data 10 may include a plurality of pieces of data.

In the present specification, a "video" may be either a video or video data used for output of the video. Also, a "video" includes a moving image and one or a plurality of still images. For example, a video may be output from an application executed in the game apparatus 100, or may be imaged using a camera etc. not shown. A method for generating a video is not limited. Also, a "sound" and a "text" in the present specification similarly include data used to generate the sound and the text.

The system 1 may further include a relay server etc. not shown in addition to a management server 200. The management server 200 may be in charge of processing for newly structuring a group, processing for one or a plurality of accounts to participate in a group, etc. The relay server not shown may relay the communication data 10 transmitted and received by one or a plurality of game apparatuses 100. The management server 200 and the relay server may be implemented in a single physical server.

A method in which a certain game apparatus 100 transmits the communication data 10 to one or a plurality of other game apparatuses 100 may be a method of directly transmitting the communication data 10 to one or a plurality of other game apparatuses 100 in addition to or instead of a method via one or a plurality of relay entities. The direct transmission method may be, for example, a P2P method etc.

### [B. Example of Chat Screen]

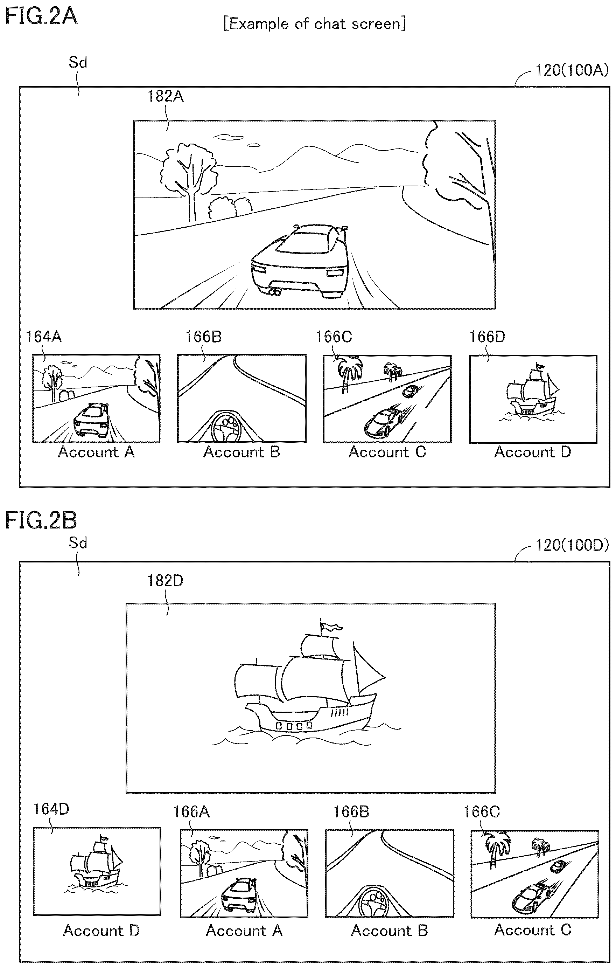

FIGS. 2A and 2B are drawings for describing an example of a chat screen generated in the game apparatus 100 according to the present embodiment.

As an example, as shown in FIG. 1, four accounts A to D participate in the same group, and the game apparatuses 100A to 100D respectively correspond to the four accounts A to D. In FIGS. 2A and 2B, as an example, each of the game apparatuses 100A to 100D mutually distributes a video of a game application executed by the own apparatus.

FIG. 2A shows an example of a chat screen displayed on a display 120 of the game apparatus 100A, and FIG. 2B shows an example of a chat screen displayed on a display 120 of the game apparatus 100D. The chat screen shown in FIGS. 2A and 2B is an example, and a screen configuration of the chat screen created using the communication data 10 is not limited.

As shown in FIG. 2A, a display video Sd is displayed on the display 120 of the game apparatus 100A during chat. The display video Sd includes a game video 182A of the game application being executed in the game apparatus 100A, a first distribution video 164A distributed by the own apparatus, and first reception distribution videos 166B to 166D respectively distributed by the game apparatuses 100B to 100D. In this example, the game apparatus 100A is distributing the first distribution video 164A to the other game apparatuses 100B to 100D.

As shown in FIG. 2B, a display video Sd showing a screen during chat of the game apparatus 100D also includes a game video 182D of the game application being executed in the game apparatus 100D, a first distribution video 164D distributed by the own apparatus, and first reception distribution videos 166A to 166C respectively distributed by the game apparatuses 100A to 100C. In this example, the game apparatus 100D is distributing the first distribution video 164D corresponding to the game video 182D to the other game apparatuses 100A to 100C.

Hereinafter, the game videos of the game application 180 executed by the own apparatus, for example, 182A and 182D may be referred to as "game video 182" without distinction. Also, the first distribution videos distributed by the own apparatus, for example, 164A and 164D may be referred to as "first distribution video 164" without distinction. Also, the first reception distribution videos 166B to 166D may be referred to as "first reception distribution video 166" without distinction. A display position of the distribution video in FIG. 2B may be different from or the same as a display position of the distribution video of the chat screen example of the game apparatus 100A shown in FIG. 2A.

In FIGS. 2A and 2B, the game videos 182A and 182D are displayed larger than the first distribution videos 164A and 164D distributed by the own apparatus respectively. The first distribution video 164 may be a video of lower quality than the game video 182. For example, at least one of resolution, frame rate, bit rate, and sound quality may be lower than that of the game video 182.

Also, the system 1 of the present embodiment can switch display of distribution videos of different qualities. In the example of FIGS. 2A and 2B, the first reception distribution videos 166A to 166D are displayed as the distribution videos, and each game apparatus 100 is configured to be capable of displaying second reception distribution videos 167A to 167D to be described later, which are different from the first reception distribution videos 166A to 166D.

### [C. Hardware Configuration Example of Game Apparatus 100]

Next, an example of a hardware configuration of a game apparatus and a server included in the system 1 will be described.

Note that in the present specification, a "computer" does not necessarily mean one apparatus, and may include an entirety in which a plurality of apparatuses are connected by wire or wirelessly. Also, when an information processing apparatus comprises a plurality of apparatuses, each of the plurality of apparatuses may be an example of the information processing apparatus.

### (c1: Game Apparatus 100)

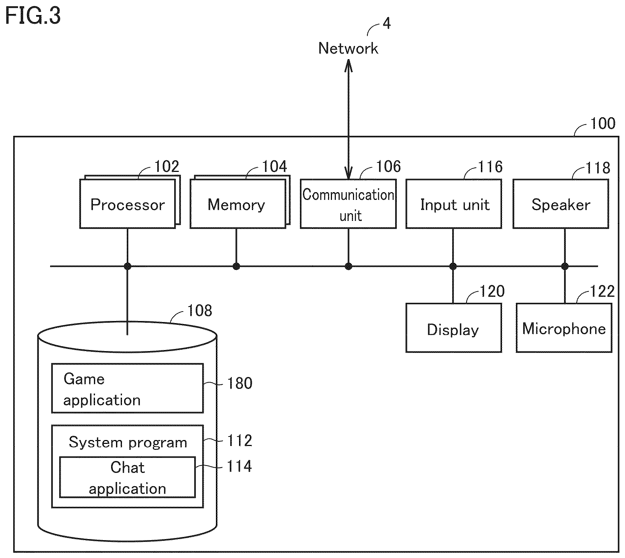

FIG. 3 is a schematic diagram showing a hardware configuration example of the game apparatus 100 according to the present embodiment. The game apparatus 100 is an information processing apparatus for providing a game to a user, and may be an apparatus dedicated to a game, or may be an apparatus capable of executing other than a game. The game apparatus 100 may be, for example, a personal computer, a television, a tablet terminal, a smartphone, a wearable terminal, a server, etc.

Also, the game apparatuses 100 respectively corresponding to a plurality of accounts participating in the same group do not need to have the same hardware configuration. For example, some game apparatuses 100 may be game dedicated machines, and other game apparatuses 100 may be a personal computer, a television, a tablet terminal, a smartphone, a wearable terminal, a server, etc. capable of executing a game application.

With reference to FIG. 3, the game apparatus 100 includes, for example, one or a plurality of processors 102, one or a plurality of volatile memories 104, a communication unit 106, one or a plurality of nonvolatile memories 108, an input unit 116, a speaker 118, a display 120, and a microphone 122. Each component may be detachable from a main body of the game apparatus 100.

The processor 102 is a processing entity for executing processing in the game apparatus 100. The processor 102 includes, for example, a CPU (Central Processing Unit), a GPU (Graphics Processing Unit), etc. The processor 102 loads a program stored in the nonvolatile memory 108 to the volatile memory 104 and executes the program.

The volatile memory 104 is a volatile storage medium accessible by the processor 102, and includes, for example, a DRAM (Dynamic Random Access Memory), a SRAM (Static Random Access Memory), etc.

The nonvolatile memory 108 is a nonvolatile storage medium accessible by the processor 102, and includes, for example, a flash memory, a hard disk, etc. The nonvolatile memory 108 may include a storage medium attachable to and detachable from the game apparatus 100, such as a cartridge and an optical disk, for example. The nonvolatile memory 108 is also referred to as a storage.

The nonvolatile memory 108 stores one or a plurality of programs such as a system program 112 and a game application 180, for example.

The system program 112 includes computer-readable instructions for hardware control of the game apparatus 100, provision of a program execution environment, etc. The system program 112 may include one or a plurality of programs or program modules. For example, the system program 112 includes a chat application 114.

The chat application 114 executes processing related to transmission and reception of the communication data 10 among the plurality of game apparatuses 100 corresponding to the plurality of accounts participating in the group.

The game application 180 includes computer-readable instructions for executing a game. A plurality of game applications 180 may be installed in the game apparatus 100. Also, the game application 180 may be read from a separate storage medium. Also, at least a part of game execution by the game application 180 may utilize another game apparatus 100, or may utilize an external resource such as a server. Also, the system program 112 may include at least a part of the game application 180.

In the present specification, a "processor" may include at least a processing circuit executing processing according to computer-readable instructions such as a CPU and a GPU, and a hard-wired circuit such as an ASIC (Application Specific Integrated Circuit) and a FPGA (Field Programmable Gate Array). In the present specification, a "memory" may include at least the volatile memory 104 and the nonvolatile memory 108, and may include another storage medium and storage apparatus.

In the game apparatus 100, an SoC (System on Chip) in which functions such as a processor and a memory are integrated may be adopted. In this case, the processor and the memory exist on the same SoC. Therefore, in the present specification, a "processor" and a "memory" may include at least both a mutually independent configuration and a mutually integrated configuration.

The communication unit 106 transmits and receives data to and from another game apparatus 100, the management server 200, etc. via the network 4. The communication unit 106 may perform data communication with another game apparatus 100 etc. via the Internet as an example of the network 4. Also, the network 4 may be a wireless network according to Bluetooth (registered trademark), ZigBee (registered trademark), a wireless LAN (IEEE 802.11 standard), etc.

The input unit 116 receives a user operation. The input unit 116 includes, for example, a keyboard, a mouse, a game controller, a touch panel, etc. The input unit 116 may be, for example, an interface with an apparatus receiving a user operation such as a game controller. The apparatus receiving a user operation may exist outside the game apparatus 100.

The display 120 displays a video generated by processing by the processor 102. The display 120 includes, for example, an LCD (Liquid Crystal Display), an organic EL display, etc. The display 120 may exist outside the game apparatus 100. In this case, the game apparatus 100 may include an interface circuit with the display 120.

The microphone 122 is arranged in a housing of the game apparatus 100, etc., and picks up a sound to generate a sound signal. The speaker 118 is arranged in the housing of the game apparatus 100, etc., and generates a sound from a sound signal. At least one of the microphone 122 and the speaker 118 may exist outside the game apparatus 100.

### (b2: Management Server 200)

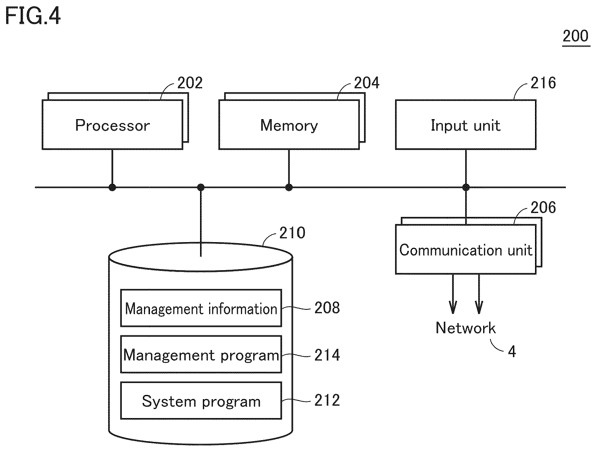

FIG. 4 is a schematic diagram showing a hardware configuration example of the management server 200 according to the present embodiment. The management server 200 may be a computer capable of managing at least the game apparatus 100. With reference to FIG. 4, the management server 200 includes, for example, one or a plurality of processors 202, one or a plurality of memories 204, one or a plurality of communication units 206, a nonvolatile memory 210, and an input unit 216.

The processor 202 is a processing entity for executing processing in the management server 200. The processor 202 includes, for example, a CPU, a GPU, etc. The processor 202 loads a program stored in the nonvolatile memory 210 to the memory 204 and executes the program. The memory 204 is a volatile storage medium accessible by the processor 202, and includes, for example, a DRAM, a SRAM, etc.

The nonvolatile memory 210 is a nonvolatile storage medium accessible by the processor 202, and includes, for example, a hard disk, a flash memory, etc. The nonvolatile memory 210 stores, for example, a system program 212, a management program 214, etc. The system program 212 includes computer-readable instructions for hardware control of the management server 200, provision of a program execution environment, etc. The management program 214 includes computer-readable instructions for executing processing related to management of which the management server 200 is in charge.

Management information 208 may be stored in the nonvolatile memory 210 or the memory 204. The communication unit 206 transmits and receives data to and from the game apparatus 100, the management server 200, etc. via the network 4. The communication unit 206 may be connected to the network 4 by wire, or may be connected to the network 4 wirelessly. The input unit 216 receives a user operation. The input unit 216 includes, for example, a keyboard, a mouse, etc.

### [D. Software Configuration Example of Game Apparatus 100]

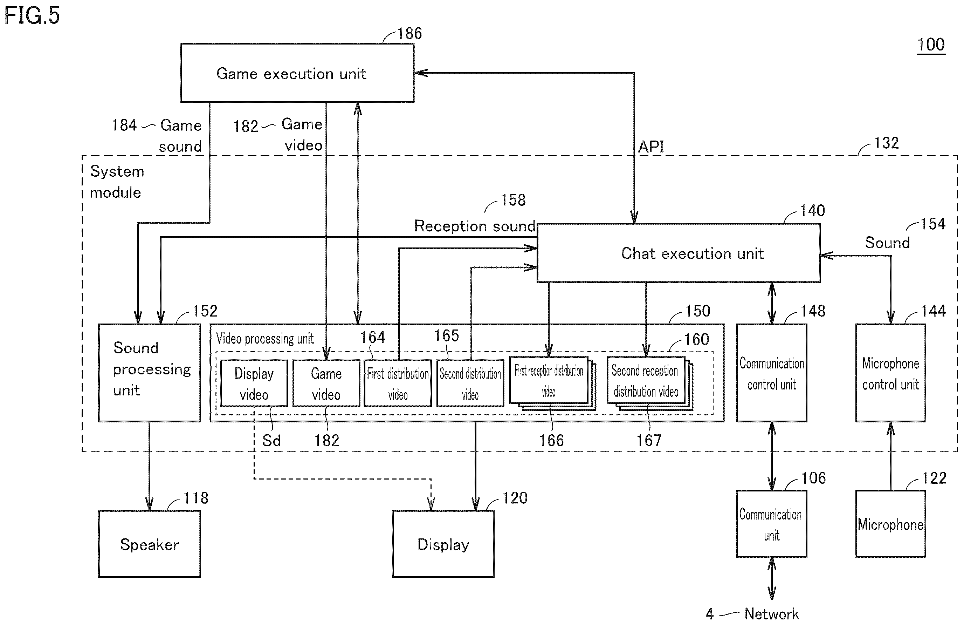

FIG. 5 is a schematic diagram showing a software configuration example of the game apparatus 100 according to the present embodiment. In the game apparatus 100, the system program 112 including the chat application 114, and the game application 180 can be executed simultaneously. Note that "executed simultaneously" means that a plurality of applications or programs are executed in parallel, and does not limit an execution timing etc.

The game apparatus 100 includes a system module 132 and a game execution unit 186 as an example of a software component. The system module 132 may be realized by the one or the plurality of processors 102 executing the system program 112. The system module 132 can also be referred to as a system program 112 being executed. The game execution unit 186 may be realized by the one or the plurality of processors 102 executing the game application 180. The game execution unit 186 can also be referred to as a game application 180 being executed.

The game execution unit 186 progresses a game based on a user operation, and outputs a game video 182 and a game sound 184. The system module 132 provides a basic function required in the game apparatus 100. The system module 132 includes, for example, a chat execution unit 140. The chat execution unit 140 can also be referred to as a chat application 114 being executed.

The system program 112 does not need to include at least a part of the chat application 114. At least a part of the chat application 114 may be an application separate from the system program 112, similarly to the game application 180. In the following description, with respect to processing executed by the system module 132, a part or all thereof may be executed by the chat execution unit 140. Therefore, in a context of processing executed by the system module 132, the system module 132 can be read as the chat execution unit 140, and the system module 132 can also be read as the system module 132 and the chat execution unit 140.

The system module 132 includes, for example, a microphone control unit 144, a communication control unit 148, a video processing unit 150, and a sound processing unit 152.

The microphone control unit 144 generates a sound 154 based on a sound picked up by the microphone 122 etc.

The communication control unit 148 gives an instruction to the communication unit 106 to control data communication with another game apparatus 100 etc. The communication control unit 148 receives at least one of a first reception distribution video 166 and a second reception distribution video 167 from each of other game apparatuses 100 during distribution.

When one of the first reception distribution video 166 and the second reception distribution video 167 is displayed, the other may be displayed by the chat execution unit 140 of the game apparatus 100 on a receiving side switching display contents according to a user operation on the receiving side. For example, the second reception distribution video 167 may be displayed instead of the corresponding first reception distribution video 166 according to a user operation, or may be displayed together with the corresponding first reception distribution video 166. The second reception distribution video 167 is a video having a quality different from the first reception distribution video 166. In the example of the present implementation, the second reception distribution video 167 is a video of higher quality than the first reception distribution video 166, and at least one of resolution, frame rate, bit rate, and sound quality is higher than that of the first reception distribution video 166. The second reception distribution video 167 may be the same as the game video 182 displayed on the game apparatus 100 on the receiving side or a transmitting side in at least one of resolution, frame rate, bit rate, and sound quality.

The second reception distribution video which is of higher quality than the first reception distribution video only needs to be such that, for example, even if a frame rate of the second reception distribution video 167 is lower than that of the first reception distribution video 166, a resolution for each frame of the second reception distribution video 167 is higher than a resolution for each frame of the first reception distribution video 166. Alternatively, even if a bit rate of the second reception distribution video 167 is lower than that of the first reception distribution video 166, sound quality of the second reception distribution video 167 only needs to be higher than sound quality of the first reception distribution video 166. Without limiting to these, at least any one of qualities among factors related to quality of a video only needs to be high. The factor related to quality of a video may be, for example, a color gamut or a luminance range in a video.

The video processing unit 150 can use a storage area 160 for storing a video. The storage area 160 may use a partial area of one or a plurality of volatile memories 104 or one or a plurality of nonvolatile memories 108, for example. The video processing unit 150 may be capable of video processing for one or a plurality of videos.

The storage area 160 may include an area for storing a display video Sd, a game video 182, a first distribution video 164, a second distribution video 165, one or a plurality of first reception distribution videos 166, and one or a plurality of second reception distribution videos 167, for example.

The first distribution video 164 and the second distribution video 165 are videos transmitted by the own apparatus to another game apparatus 100, and correspond respectively to a first reception distribution video 166 and a second reception distribution video 167 received from the other game apparatus 100. That is, the first distribution video 164 and the second distribution video 165 transmitted by the own apparatus are respectively stored as a first reception distribution video 166 and a second reception distribution video 167 in another game apparatus 100.

The chat execution unit 140 executes processing for communication between users within a group. For example, the chat execution unit 140 may execute processing for participating in a designated group or leaving a group based on a user operation.

The chat execution unit 140 may generate and transmit communication data 10 based on at least one of a sound 154, a first distribution video 164, and a second distribution video 165 as processing for performing distribution. Each of the first distribution video 164 and the second distribution video 165 may be generated based on a game video 182. Also, each of the first distribution video 164 and the second distribution video 165 may include a video of a user imaged using a camera etc. not shown.

The chat execution unit 140 may output a reception sound 158 included in one or a plurality of pieces of communication data 10 from one or a plurality of other game apparatuses 100 to the sound processing unit 152 as processing for receiving distribution. The sound processing unit 152 may generate a sound signal based on a sound, and output the generated sound signal to the speaker 118.

The video processing unit 150 may generate a display video Sd using at least one of a game video 182, a first distribution video 164, one or a plurality of first reception distribution videos 166, and one or a plurality of second reception distribution videos 167 according to an instruction from the chat execution unit 140. The display video Sd is used to display a video on the display 120 of the own apparatus.

The chat execution unit 140 may have an API (Application Programming Interface) for exchanging data with an application. In the present embodiment, an application such as a game application 180 requests the chat execution unit 140 to execute processing according to an instruction system predefined as an API. According to a request via an API to the chat execution unit 140 by the game execution unit 186, the chat execution unit 140 performs response processing according to requested contents. The response processing may be, for example, restricting data transmission to another game apparatus 100, or causing an application to acquire some information.

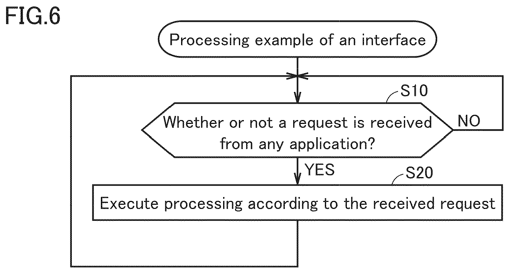

FIG. 6 is a flowchart showing a processing example of an interface of the chat execution unit 140 according to the present embodiment. With reference to FIG. 6, the chat execution unit 140 determines whether or not a request is received from any application (Step S10). If a request is not received from any application (NO in Step S10), the processing of Step S10 is repeated. If a request is received from any application (YES in Step S10), the chat execution unit 140 executes processing according to the received request (Step S20). Then, the processing in and after Step S10 is repeated. In this manner, the game apparatus 100 of the present embodiment is mounted with a function of receiving a request from an application.

### [E. Flow of Display Restriction Processing by Game Application]

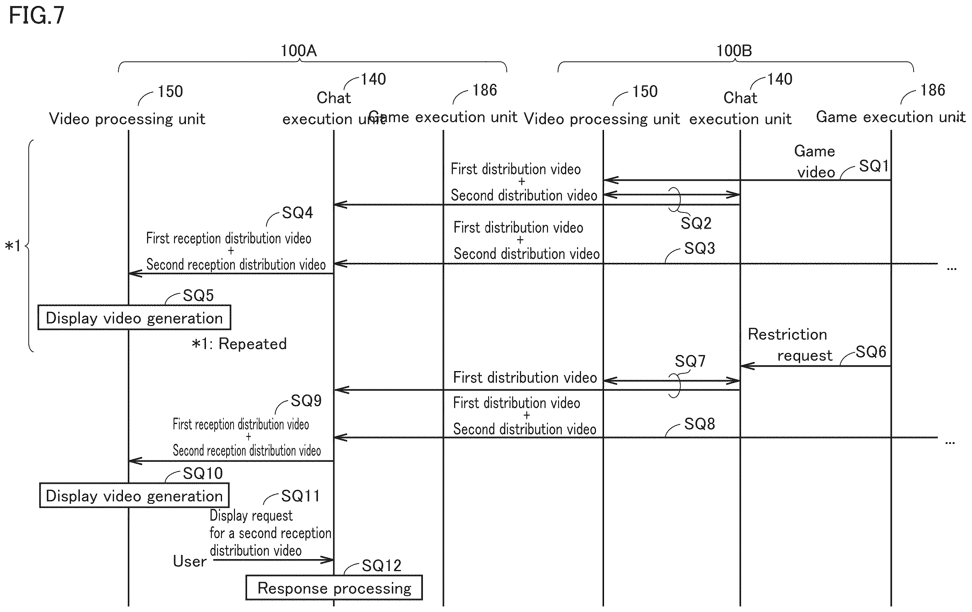

FIG. 7 is a sequence diagram showing an example of display restriction processing by the game application 180 according to the present embodiment. As described above, in the present embodiment, a video exchanged within a group may include an image of a game application 180 being executed, and a plurality of types of videos having different qualities can be distributed. A developer of a game application 180 may intend to provide the game application 180 to a user with a video of a specific quality.

In the present embodiment, described processing may include other processing, or may not include a part of processing. Also, an execution order of each processing is an example, and for example, a plurality of processings may be executed in parallel, or some processings may be executed in a reverse order of description.

FIG. 7 mainly shows an exchange between a game apparatus 100A and a game apparatus 100B in a state where chat as shown in FIGS. 2A and 2B is being executed. FIG. 7 shows a video processing unit 150, a chat execution unit 140, and a game execution unit 186 included in each of the game apparatuses 100A and 100B.

During execution of chat, the game execution unit 186 of the game apparatus 100B transmits a game video 182 to the video processing unit 150 (Sequence SQ1). The video processing unit 150 of the game apparatus 100B generates a first distribution video 164 and a second distribution video 165 based on the received game video 182. At this time, the video processing unit 150 may, for example, generate either a first distribution video 164 or a second distribution video 165 based on the received game video 182, and generate the other based on the generated one.

The chat execution unit 140 of the game apparatus 100B acquires a first distribution video 164 and a second distribution video 165 corresponding to a game application being executed in the game apparatus 100B from the video processing unit 150, and transmits the acquired first distribution video 164 and second distribution video 165 to a game apparatus 100A participating in a session (Sequence SQ2). Although not shown in FIG. 7, the chat execution unit 140 of the game apparatus 100B transmits the first distribution video 164 and the second distribution video 165 to game apparatuses 100C and 100D as well.

Also in game apparatuses 100C and 100D not shown, a first distribution video 164 and a second distribution video 165 are respectively transmitted to the game apparatus 100A by a procedure similar to Sequences SQ1 and SQ2 (Sequence SQ3). That is, the game apparatus 100A receives a first distribution video 164 and a second distribution video 165 from each of the game apparatuses 100B to 100C in Sequences SQ2 and SQ3.

The chat execution unit 140 of the game apparatus 100A transmits a first distribution video 164 and a second distribution video 165 transmitted by another game apparatus 100 as a first reception distribution video 166 and a second reception distribution video 167 to the video processing unit 150 (Sequence SQ4). In Sequence SQ4, the video processing unit 150 associates identification information capable of identifying a game apparatus 100 as a reception source with the received first reception distribution video 166 and second reception distribution video 167, and stores them in the storage area 160.

The video processing unit 150 generates a display video Sd based on the received first reception distribution video 166 and second reception distribution video 167 (Sequence SQ5). By repeating processing of Sequences SQ1 to SQ5, a user of the game apparatus 100A can display reception distribution videos of other game apparatuses 100B to 100D as shown in FIGS. 2A and 2B.

In the example of FIGS. 2A and 2B, the second reception distribution video 167 received from each of the game apparatuses 100B to 100D is not displayed on the display 120 of the game apparatus 100A, and only the first reception distribution video 166 is displayed. That is, the display video Sd generated in Sequence SQ5 is not generated using the second reception distribution video 167. As described above, the game apparatus 100 on the receiving side may be capable of displaying the second reception distribution video 167 based on a command from a user on the receiving side. Thereby, the game apparatus 100 can provide a first reception distribution video or a high-quality second reception distribution video according to a request of a user on a receiving side.

In the present embodiment, a game application 180 executed in the game apparatus 100 may be capable of restricting display of at least one of a first distribution video 164 or a second distribution video 165 in another game apparatus 100 by calling an API etc. to the system program 112. Also, in the present embodiment, restriction of display of a video in the game apparatus 100 indicates that a video is not displayed in the game apparatus 100. However, restriction of display of a video in the game apparatus 100 is not limited to this. Restriction of display of a video in the game apparatus 100 may be, for example, that a video is not partially displayed, that a video is displayed only in an processed state, that another video is superimposed on a video, that a video becomes of lower quality, etc. Also, a start timing and an end timing of restriction of display of a video in the game apparatus 100 may be an arbitrary timing according to a progress of a game of the game application 180.

In the example of FIG. 7, a game application 180 executed in the game apparatus 100B makes a restriction request for not displaying a high-quality second distribution video in another game apparatus 100 (Sequence SQ6). Thereby, the chat execution unit 140 of the game apparatus 100B acquires only a first distribution video 164 from the video processing unit 150, and transmits only the acquired first distribution video 164 to the game apparatus 100A (Sequence SQ7). That is, the chat execution unit 140 of the game apparatus 100B does not transmit a second distribution video 165 to the game apparatus 100A in Sequence SQ7.

On the other hand, game apparatuses 100C and 100D not shown respectively transmit a first distribution video 164 and a second distribution video 165 to the game apparatus 100A similarly to Sequence SQ3 (Sequence SQ8). The chat execution unit 140 of the game apparatus 100A transmits the received first distribution video 164 and second distribution video 165 as a first reception distribution video 166 and a second reception distribution video 167 to the video processing unit 150 similarly to Sequence SQ4 (Sequence SQ9). The video processing unit 150 generates a display video Sd based on the received first reception distribution video 166 and second reception distribution video 167 (Sequence SQ10). Note that in Sequences SQ2, SQ3, and SQ8, both the first distribution video 164 and the second distribution video 165 may not be transmitted, and only either one may be transmitted. The distribution video to be transmitted may be determined based on a request by the receiving game apparatus 100.

Subsequently, a user of the game apparatus 100A requests the chat execution unit 140 via the input unit 116 to display a second reception distribution video 167 of an arbitrary account participating in a group (SQ11). The chat execution unit 140 executes response processing according to a command from a user of the game apparatus 100A (SQ12).

### [F. Execution Example of Response Processing]

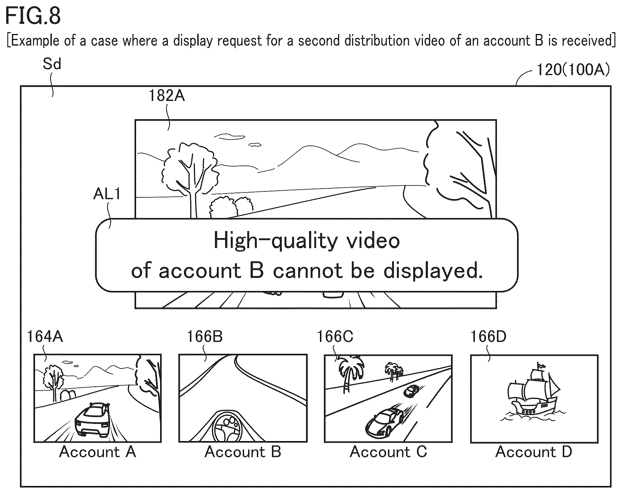

FIG. 8 displays an example of a case where the chat execution unit 140 of the game apparatus 100A receives a display request for a second reception distribution video 167 of an account B in Sequence SQ11. As described in FIG. 7, according to a restriction request from a game application 180 being executed in the game apparatus 100B, the game apparatus 100B does not transmit a second distribution video 165 to the game apparatus 100A. Therefore, the game apparatus 100A cannot perform display of the requested second reception distribution video 167. At this time, for example, an alert image AL1 including a text such as "High-quality video of account B cannot be displayed." may be displayed on the display 120. The alert image AL1 is not limited only to an image displaying a text, and may be video content, or may include audio. Also, in another example implementation, for example, when restriction of display indicates that display by a video is not performed and a still image is displayed as a substitute, an alert image AL1 displayed according to a display request for a second reception distribution video 167 may include a still image transmitted instead of a second distribution video 165 by the game apparatus 100B. Also, without limiting to this, an alert image AL1 may include data transmitted as a substitute for a second distribution video 165 by the game apparatus 100B.

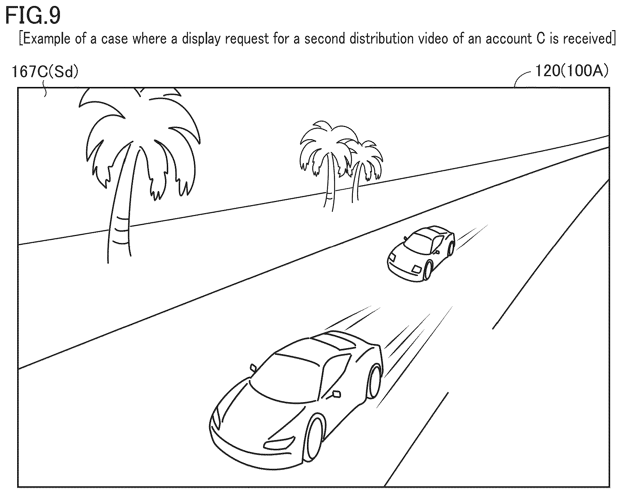

On the other hand, FIG. 9 displays an example of a case where a display request for a second reception distribution video 167 of an account C is received in Sequence SQ11. In Sequence SQ8, the game apparatus 100C transmits a second distribution video 165 to the game apparatus 100A. The game apparatus 100A displays a second reception distribution video 167C received from the game apparatus 100C in Sequence SQ8 according to a command of a user of the game apparatus 100A.

In this manner, the system 1 of the present embodiment can impose restriction on a distribution video to a distribution destination game apparatus 100 according to a request from a game application 180. For example, by restricting display of a distribution video displayed on an entire display, it can be distinguished from an experience when a user who has viewed the distribution video plays in the future. Also, for example, by restricting display of a distribution video whose quality is low compared to a game video, an experience similar to that of a user who is playing can be provided also to a user who views distribution. Without limiting to the above, by imposing restriction on a distribution video to a distribution destination game apparatus 100 according to a request from a game application 180, a video of a quality in accordance with an intention of a developer of the game application 180 can be provided to another game apparatus 100. Note that as shown in FIGS. 2A, 2B and 9, the game apparatus 100A may be configured to be capable of switching display of a first reception distribution video 166C and display of a second reception distribution video 167C, or may be capable of displaying both a first reception distribution video 166C and a second reception distribution video 167C.

### [G. Modification Examples]

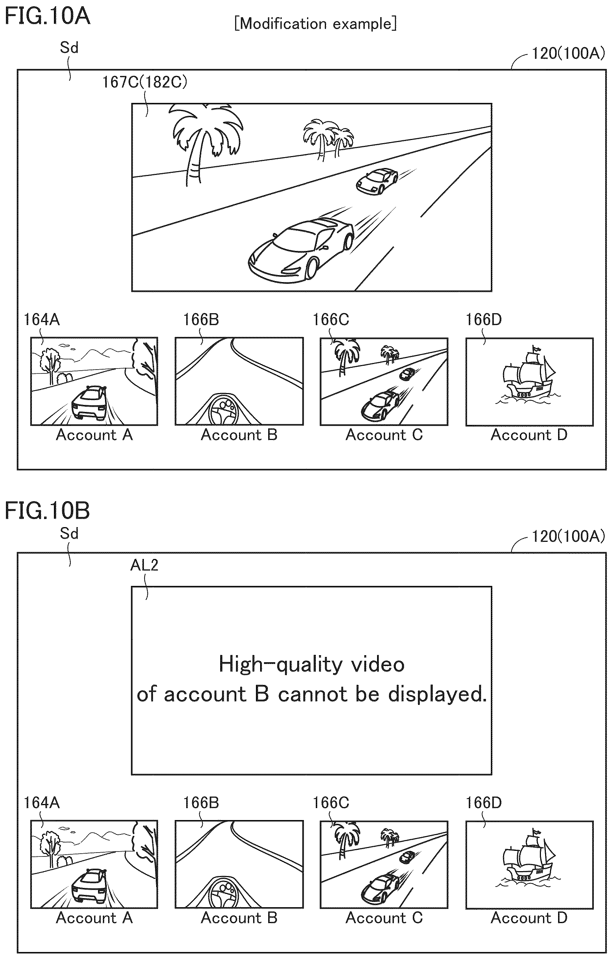

FIGS. 10A and 10B are drawings showing a modification example of a display mode of a second reception distribution video. In the example of FIG. 9, the example in which a second reception distribution video 167C is displayed on an entire screen of the display 120 has been described. However, a second reception distribution video 167C may be displayed instead of a game video 182A, or superimposedly, as shown in FIG. 10A. At this time, a first reception distribution video 166C does not need to be received or displayed by the game apparatus 100A. When a display request for a second reception distribution video 167B of a game apparatus 100B for which a restriction request is made is received, an alert image AL2 may be displayed instead of a game video 182A as shown in FIG. 10B.

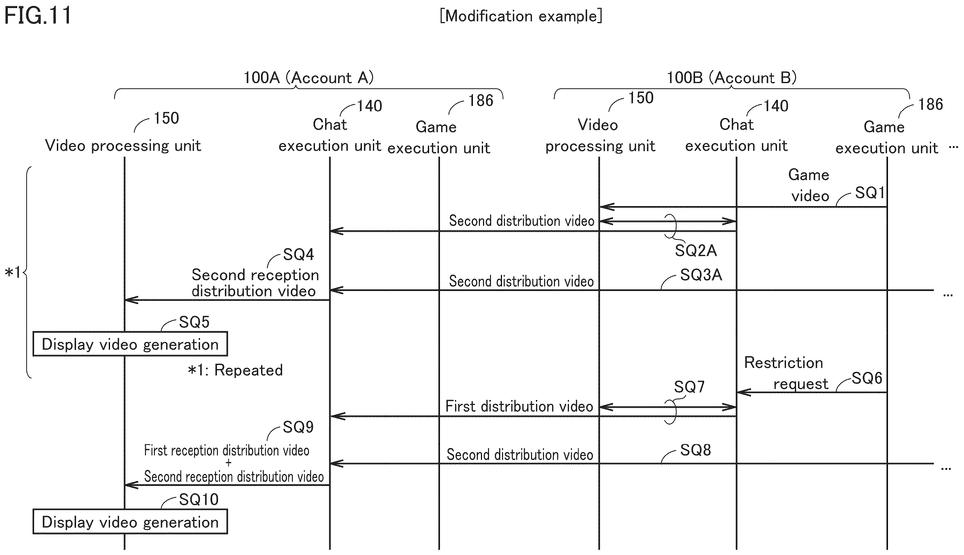

FIG. 11 is a drawing for describing a modification example of a video transmitted before a restriction request. In the modification example of FIG. 11, only a second distribution video is transmitted to the game apparatus 100A as shown as Sequences SQ2A and SQ3A. In this case, a second distribution video 165A and second reception distribution videos 167B to 167D may be displayed instead of a first distribution video 164A and first reception distribution videos 166B to 166D at a lower part of a game video 182A shown in FIG. 2A.

After a restriction request (Sequence SQ6) is made in FIG. 11, the chat execution unit 140 of the game apparatus 100B may transmit only a first distribution video 164 instead of a second distribution video 165. Thereby, the game apparatus 100A may display a first reception distribution video 166B on the display 120 instead of a second reception distribution video 167B. That is, a game application 180 of the game apparatus 100B may restrict distribution of a high-quality second reception distribution video 167B by making a restriction request, and may cause switching to distribution of a first reception distribution video 166B. At this time, a size of an image of a first reception distribution video 166B displayed on the display 120 of the game apparatus 100A may be the same as or different from a size of an image of a second reception distribution video 167B displayed before restriction.

Also, in the examples of FIGS. 7 and 11, the example in which a second reception distribution video 167 targeted for restriction is not transmitted from the game apparatus 100B to the game apparatus 100A after a restriction request is made has been described. However, the game apparatus 100B may perform transmission of a second reception distribution video 167 even after a restriction request is made. In this case, for example, the game apparatus 100B may transmit information indicating that the restriction request is made for a second reception distribution video 167B, together with the second reception distribution video 167B. Information indicating that a restriction request is made may be, for example, a flag. The game apparatus 100A may restrict display of a second reception distribution video 167B on the display 120 based on information indicating that the restriction request is made for the second reception distribution video 167B. Alternatively, the game apparatus 100B may transmit a mute image such as an image corresponding to an alert image or a black image instead of a second reception distribution video 167 after a restriction request is made. Also, when transmission and reception of a second reception distribution video 167 are performed via a relay server, presence or absence of information indicating that a restriction request is made may be determined by the relay server, and whether or not to relay to the game apparatus 100 on the receiving side may be determined.

Also, in the examples of FIGS. 7 and 11, the example in which a first distribution video 166 and a second distribution video 167 transmitted by the game apparatus 100 are both received by another game apparatus 100 has been described. However, for example, a first distribution video 166 and a second distribution video 167 are transmitted from a game apparatus 100 to a relay server, and the relay server may transmit either a first distribution video 166 or a second distribution video 167 to a game apparatus 100 of a request source according to a request from another receiving game apparatus 100. At this time, for example, when a restriction request for a second distribution video 167 is made by a game application 180 executed in the game apparatus 100, the second distribution video targeted for restriction is not transmitted to a relay server. At this time, for example, when another game apparatus 100 requests a relay server for a second distribution video 167 targeted for restriction, a second distribution video 167 cannot be acquired, and display of a second distribution video 167 in another game apparatus 100 serving as a request source is restricted.

Also, in the examples of FIGS. 2A, 2B and 9, the example in which a first reception distribution video 166C and a second reception distribution video 167C indicate the same contents has been described. However, a first reception distribution video 166C and a second reception distribution video 167C may be images of different contents. For example, a first reception distribution video 166C may be an image in which a part of an image included in a second reception distribution video 167C is cut out. Also, a second reception distribution video 167C may be an image in which a part of an image included in a first reception distribution video 166C is cut out.

Further, in another example, a first reception distribution video 166C and a second reception distribution video 167C may have different viewpoints in the same virtual space. More specifically, a first reception distribution video 166C may be an image indicating an overhead viewpoint of a virtual space, and a second reception distribution video 167C may be a viewpoint of a player operating the game apparatus 100C. Also, in the example of FIG. 10A, it has been described that a second reception distribution video 167C may be a game video 182C displayed in the game apparatus 100C, but a quality of a second reception distribution video 167C may differ from a quality of a game video 182C. For example, in the game apparatus 100C, a quality may be changed when a game video 182C is processed as a second distribution video 165C.

Note that a sequence diagram and a flowchart described above may include other processing than illustrated processing, or may not include a part of processing. Also, an order of each processing is an example, and for example, each processing may be executed simultaneously, or may be executed in a reverse order. Also, each processing is divided and described for convenience, but may be integrated processing. Also, each processing may be executed, for example, at specified intervals (for example, every processing frame, every 1/30 seconds). Also, in the above, even when data is described using the same term, each data does not need to match completely. At least, when certain information is substantially transmitted by certain data and other data, the certain data and the different data may be regarded as the same data. A name of data does not limit a range indicated by the data.

The embodiment disclosed this time should be considered to be exemplary in all respects and not restrictive. The scope of the present invention is shown not by the above description but by the claims, and is intended to include all modifications within the meaning and scope equivalent to the claims.

## Claims

1. An information processing apparatus (100) configured to execute a game application (180), the information processing apparatus comprising:
one or more processors (102); and
one or more memories (108) storing instructions that, when executed by the one or more processors, cause the information processing apparatus to perform operations comprising:
executing the game application as a first game application;
participating in a session in which a first video of the game application and a second video of the game application are distributed, the second video having a higher quality than the first video;
displaying at least one of the first video or the second video distributed by another information processing apparatus; and
restricting the other information processing apparatus from displaying the first video of the first game application or displaying the second video of the first game application, based on a first request by the first game application.

2. The information processing apparatus (100) according to claim 1, wherein the restricting the other information processing apparatus from displaying the second video is performed by stopping distributing the second video by the information processing apparatus based on the first request.

3. The information processing apparatus (100) according to claim 1, wherein the second video is distributed when the first video is distributed.

4. The information processing apparatus (100) according to claim 1, wherein the restricting the other information processing apparatus from displaying the second video based on the first request comprises permitting displaying the first video instead of the second video while distributing the second video.

5. The information processing apparatus (100) according to claim 1, wherein a resolution of the second video is higher than a resolution of the first video.

6. The information processing apparatus (100) according to claim 1, wherein a bit rate of the second video is higher than a bit rate of the first video.

7. The information processing apparatus (100) according to claim 1, wherein a frame rate of the second video is higher than a frame rate of the first video.

8. The information processing apparatus (100) according to claim 1, wherein the second video is displayed larger than the first video.

9. The information processing apparatus (100) according to claim 1, wherein:
the operations further comprise displaying a third video that is a video of the first game application; and
the third video is higher in quality than the first video.

10. The information processing apparatus (100) according to claim 1, wherein the second video is displayed as a full screen display.

11. The information processing apparatus (100) according to claim 1, wherein the second video, the first video, and one or more other first videos different from each other are displayed.

12. The information processing apparatus (100) according to claim 1, wherein the operations further comprise:
displaying a substitute image comprising information indicating that displaying is restricted instead of the second video, when the information processing apparatus is restricted from displaying the second video.

13. The information processing apparatus (100) according to claim 1, wherein only one of the first video or the second video is displayed.

14. A method used for an information processing apparatus (100) capable of executing a game application (180), the method comprising:
executing the game application as a first game application;
participating in a session in which a first video of the game application and a second video of the game application are distributed, the second video having a higher quality than the first video;
displaying at least one of the first video or the second video distributed by another information processing apparatus; and
restricting the other information processing apparatus from displaying the first video of the first game application or displaying the second video of the first game application, based on a first request by the first game application.

15. A program causing one or more processors to perform the method of claim 14.
